# EUROPÄISCHE PATENTSCHRIFT

(11) **EP 1 468 635 B1**
(45) Veröffentlichungstag und Bekanntmachung des Hinweises auf die Patenterteilung: **22.06.2005**
(21) Anmeldenummer: 03009003.9
(22) Anmeldetag: 17.04.2003
(51) Int. Cl.: A47J 31/00, A47J 31/10, A47J 31/46

(54) **Vorrichtung zum Zubereiten heisser Getränke**
Device for preparing hot beverages
Dispositif pour la préparation de boissons chaudes

(43) Veröffentlichungstag der Anmeldung: 20.10.2004
(73) Patentinhaber: Timm, Eberhard, 21614 Buxtehude (DE)
(72) Erfinder: Timm, Eberhard, 21614 Buxtehude (DE)
(74) Vertreter: Glawe, Delfs, Moll & Partner

(56) Entgegenhaltungen:
- EP-A- 1 118 298
- US-A- 5 287 796
- US-B1- 6 327 965

## Beschreibung

Die Erfindung betrifft eine Vorrichtung zum Zubereiten heißer Getränke, Suppen und ähnlicher Nahrungs-/Genußmittel mit einem Trinkbecher und einem darin einzusetzenden mit einer elektrischen Heizeinrichtung versehenen verschließbaren Behälter für die zu erwärmende Flüssigkeit, die nach dem Erwärmen in den Trinkbecher entleert wird, nachdem ein Ventil des Behälters geöffnet worden ist.

Bei einer bekannten Vorrichtung dieser Art (EP 1 118 298 A1) wird der Behälter in einen Trinkbecher eingesetzt, mit Wasser befüllt und dieses dann mit Hilfe der elektrischen Heizeinrichtung erwärmt. Hat das Wasser die nötige Temperatur erreicht, so wird der Behälter teilweise aus dem Trinkbecher herausgehoben, so daß sich das Ventil öffnet und das Wasser in den Trinkbecher gelangt, wo es die dort vorher eingebrachte Brühsubstanz auflöst. Ist alles Wasser aus dem Behälter in den Trinkbecher gelangt, kann der Behälter abgehoben werden, so daß das Getränk genossen werden kann.

Vorrichtungen dieser Art werden insbesondere in Kraftfahrzeugen verwendet, bei denen man der Bedienung möglicherweise nicht die nötige Aufmerksamkeit zuwendet. Dies kann zu Verbrühungen oder zum Verschütten von Wasser führen.

Wird der mit Wasser zu befüllende Behälter in der Hand gehalten, so ist das Ventil geöffnet, so daß oben eingegossenes Wasser unten wieder herausläuft. Hat man den Heizbehälter zwischenzeitlich in einem anderen Becher abgesetzt, dies aber nur soweit getan, daß das Ventil geöffnet bleibt, so läßt sich der Heizbehälter nicht füllen, da das Wasser unten wieder herausläuft, bis es überläuft und aus dem unteren Behälter herausläuft. Hat man den Heizbehälter aber richtig eingesetzt und mit Wasser befüllt, so daß kein Wasser herausgelaufen ist, so besteht die Gefahr, daß in diesem Moment die Heizung eingeschaltet wird. Wird dann der Heizbehälter aus dem Becher herausgehoben, um ihn in den Becher mit der Brühsubstanz einzusetzen, läuft das Wasser unten heraus und kann wieder Verbrühungen bewirken. Es sind also vielseitige Fehlmanipulationen möglich, die im weniger schlimmen Fall zum Verschütten von Wasser, im schlimmeren Fall aber zu ernsthaften Verbrühungen führen können.

*Es ist auch bekannt, ein Ventil am Boden des Behälters vorzusehen, in dem das Wasser erhitzt wird, das sich dann bei Ausbilden des Überdrucks in Folge der Erwärmung öffnet (US 5 287 796)*.

*Es ist weiter bekannt, einen Behälter mit heißer Flüssigkeit zu füllen, der sich dann öffnet, wenn er auf ein Trinkgefäß aufgesetzt wird, indem der Rand des Trinkgefäßes auf ein zurückspringendes kreisförmiges Ventilbetätigungselement wirkt (US 6 327 965 B1)*.

*Die Aufgabe der Erfindung liegt in der Schaffung einer Vorrichtung der Eingangs genannten Art, bei der das Ventil einfacher aufgebaut ist und die Vorrichtung vielfacher verwendbar ist.*

*Die erfindungsgemäße Lösung besteht darin, daß das Ventil zum Zusammenwirken mit einem axial sich erstreckenden mittigen Vorsprung im Trinkbecher zum Öffnen des Ventils beim Einsetzen des Behälters in den Trinkbecher ausgebildet ist, und daß der Vorsprung an einem scheibenförmigen mit Durchbrechungen versehenen Element angeordnet ist, das in den Trinkbecher in einem Abstand vom Boden desselben eingesetzt ist*.

Die Aufgabe der Erfindung besteht in der Schaffung einer Vorrichtung der eingangs genannten Art, die einfacher und sicherer zu bedienen ist.

Die erfindungsgemäße Lösung besteht darin, daß das Ventil zum Zusammenwirken mit im Trinkbecher angeordneten Einrichtungen zum Öffnen des Ventils beim Einsetzen des Behälters in den Trinkbecher ausgebildet ist.

Der Behälter, in dem die Flüssigkeit erwärmt werden soll, kann zum Beispiel in der Hand gehalten werden, wenn er befüllt wird. Das Ventil bleibt geschlossen, so daß keine Flüssigkeit austreten kann. Der Behälter kann aber auch in ein Gefäß eingesetzt werden und dort möglicherweise auch längere Zeit verbleiben, bis er benötigt wird. Auf diese Weise ist seine Außenseite vor Verschmutzung geschützt. Dies bereitet bei Kraftfahrzeugen keine Probleme, da normalerweise Becherhalter paarweise oder zumindestens zwei Becherhalter in gewisser Nähe zueinander angeordnet sind. In diesem Zustand kann der Behälter auch mit Flüssigkeit, d.h. normalerweise Wasser gefüllt werden.

Soll ein Heißgetränk zubereitet werden, so wird die Heizung eingeschaltet, wobei sich der Behälter vorzugsweise weiterhin in dem anderen Gefäß befindet. Ist die Brühtemperatur erreicht, wird der Behälter mit der erhitzten Flüssigkeit in den eigentlichen Trinkbecher eingesetzt, wobei dann beim Einsetzten das Ventil geöffnet wird, so daß das heiße Wasser nach unten in den Trinkbecher gelangen kann, wo vorher die Brühsubstanz eingebracht ist. Hat sich der Heizbehälter geleert, kann er aus dem Trinkbecher herausgenommen werden und zum Beispiel wieder in das andere Gefäß, z.B. einen Becher, der nicht mit entsprechenden Einrichtungen zum Öffnen des Ventils versehen ist, eingesetzt werden, bis er wieder benötigt wird.

Die anfangs erwähnten Fehlmanipulationen bei der Vorrichtung des Standes der Technik können also nicht auftreten. Es kann lediglich Flüssigkeit aus dem Heizbehälter austreten, wenn dieser in den Trinkbecher eingesetzt ist.

Der Vorsprung ist an einem scheibenförmigen mit Durchbrechungen versehenen Element angeordnet, das in den Trinkbecher in einem Abstand vom Boden desselben eingesetzt ist. Das scheibenförmige Element kann dabei als Überschwappsicherung ausgebildet sein. Ist nämlich der Behälter, in dem das Wasser erhitzt worden ist, wieder aus dem Trinkbecher herausgehoben, ist über der Oberfläche des zubereiteten Getränks das scheibenförmige Element mit Durchbrechungen angeordnet, die Bewegungen der Flüssigkeit so stark bremsen bzw. dämpfen, daß die Flüssigkeit nicht mehr überschwappen kann. Das scheibenförmige Element kann dann zum Genießen des Getränks herausgenommen werden oder aber auch dort verbleiben, um auch beim Genießen des zubereiteten Getränks ein Überschwappen zu vermeiden.

Der Behälter für die zu erwärmende Flüssigkeit ist wie erwähnt verschließbar, um ein Verschütten oder Überschwappen der Flüssigkeit zu vermeiden. Als besonders zweckmäßig hat es sich hier erwiesen, wenn der Behälter für die zu erwärmende Flüssigkeit mit einem aufklappbaren Deckel versehen ist. Dieser kann schnell geöffnet werden, und es steht eine große Öffnung zur Verfügung, um Flüssigkeit einzufüllen.

Als besonders vorteilhaft hat es sich erwiesen, wenn der Dekkel mit einem Schieber oder einer verschwenkbaren Scheibe in der geschlossenen Stellung arretierbar ist. Ist der Behälter also gefüllt, wird der geschlossene Deckel mit dem Schieber oder der Scheibe gesichert, so daß sich der Deckel nicht irrtümlich oder bei einem Unfall, auch wenn er aus der Halterung fällt, öffnen kann, was die Gefahr des Verschüttens von Wasser oder bei heißem Wasser sogar die Gefahr von Verbrühungen bedeuten würde.

Zweckmäßigerweise ist dabei der Schieber oder die Scheibe als Schalter für die Heizeinrichtung ausgebildet, betätigt einen Schalter für die Heizeinrichtung oder macht nur bei Verriegelung des Deckels einen Schalter für die Heizeinrichtung zugänglich. In diesem Falle kann sichergestellt werden, daß die Heizeinrichtung nur dann betätigt wird oder betätigt werden kann, wenn der Deckel geschlossen ist. Dadurch wird die Gefahr von Fehlmanipulationen weiter verringert.

Die Erfindung wird im Folgenden anhand von vorteilhaften Ausführungsformen unter Bezugnahme der beigefügten Zeichnungen beschrieben. Es zeigen:
- Figur 1: teilweise im Schnitt einen Behälter für zu erhitzende Flüssigkeit;
- Figur 2: im Schnitt einen Trinkbecher mit eingesetztem Überschwappschutz;
- Figur 3: den Überschwappschutz der Figur 2 von oben gesehen;
- Figur 4: eine Darstellung nach dem Erhitzen des Wassers, nachdem der Behälter mit dem erhitzten Wasser in den Trinkbecher eingesetzt ist;
- Figur 5: eine andere Ausführungsform des Behälters der Figur 1;
- Figur 6: eine andere Ausführungsform des Trinkbechers mit Überschwappschutz der Figur 2;
- Figur 7: den Behälter der Figur 5, der in den Trinkbecher der Figur 6 eingesetzt ist;
- Figur 8-10: Einzelheiten des Deckels, mit dem der Behälter verschlossen werden kann;
- Figur 11-12: Ansichten des Deckels der Figuren 8 bis 10 vor und nach der Verriegelung durch einen Schieber; und
- Figur 13-14: in ähnlichen Ansichten wie in Figur 11 und 12 eine Ausführungsform mit einer verschwenkbaren Scheibe.

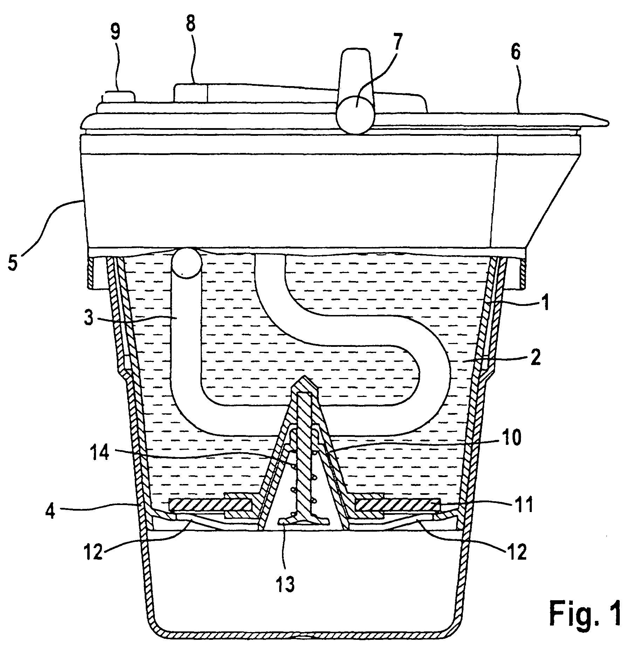

In Figur 1 ist ein Behälter 1 gezeigt, in dem Flüssigkeit, insbesondere Wasser 2 mit einer Heizschlange 3 erwärmt werden kann. Der Becher 1 ist dabei in ein Gefäß 4 eingesetzt, das die Form eines Trinkbechers haben kann. Der Behälter 1 weist eine obere Abdeckung 5 mit einer Klappe 6 auf, die bei 7 schwenkbar gelagert ist und durch einen Schieber 8 geschlossen werden kann. Bei 9 ist ein Schalter angeordnet, mit dem die Heizschlange ein- bzw. ausgeschaltet werden kann. Im Boden des Behälters 1 ist ein Ventil angeordnet, das einen Ventilteller 10 mit einem kegelförmigen Mittelteil und eine am Umfang angeordnete Gummidichtung 11 aufweist. Diese verschließt in der in Figur 1 gezeigten Darstellung Öffnungen 12. Der Ventilteller 11 ist mit einem Stößel 13 verbunden. Durch eine Druckfeder 14 wird dieser Stößel 13 nach unten gedrückt und damit das Ventil in die geschlossene Stellung gedrückt.

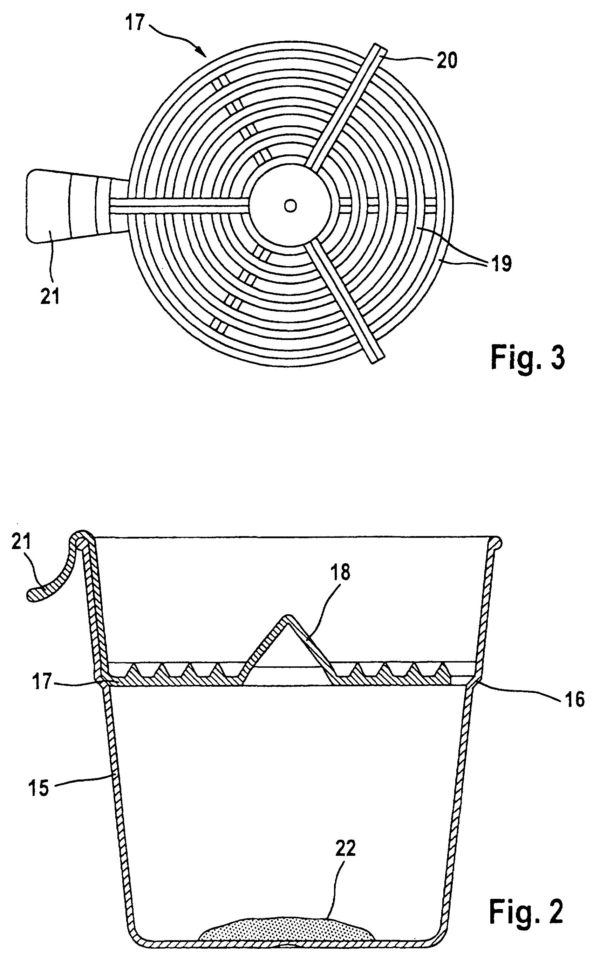

Der in Figur 2 gezeigte Trinkbecher 15 weißt an seinem Umfang eine Schulter 16 auf, auf die ein scheibenförmiges Element 17 aufgesetzt ist, das ein mittige Erhöhung 18 aufweist. Das scheibenförmige Element 17 ist aus konzentrischen Elementen 19 aufgebaut, die durch radiale Stege 20 zusammengehalten werden. Außerdem weißt das scheibenförmige Element 17 eine Lasche 21 auf, mit der es aus dem Becher 15 herausgehoben werden kann. Das scheibenförmige Element 17 ist in Figur 3 von oben gezeigt.

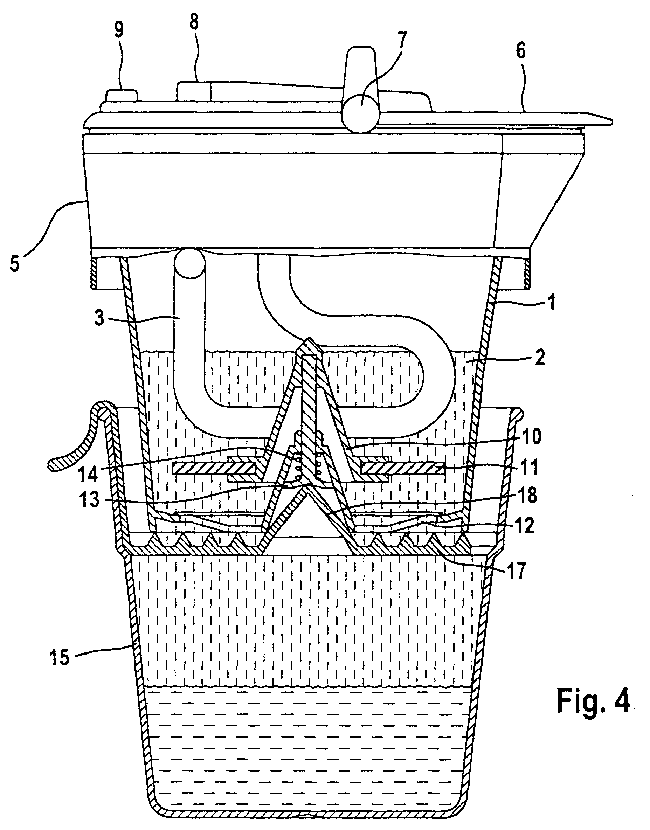

Ist nun das Wasser 2 im Behälter 1 erwärmt, so wird der Behälter 1 der Figur 1 in den Becher 15 der Figur 2 eingesetzt, in den vorher eine Brühsubstanz 22 eingebracht wurde. Wie dies in Figur 4 gezeigt ist, drückt dabei der Vorsprung 18 den Stößel 13 gegen die Kraft der Feder 14 nach oben, so daß sich der Ventilteller 10 mit den Dichtungen 11 nach oben bewegt und das Wasser 2 durch die Öffnungen 12 und die Öffnungen des scheibenförmigen Elements 17 nach unten gelangen und die Brühsubstanz 22 auflösen kann.

Anschließend kann der Behälter 1 aus dem Becher 15 herausgehoben werden, so daß das zubereitete Getränk, gegebenenfalls nach Entfernung des scheibenförmigen Elements 17 genossen werden kann.

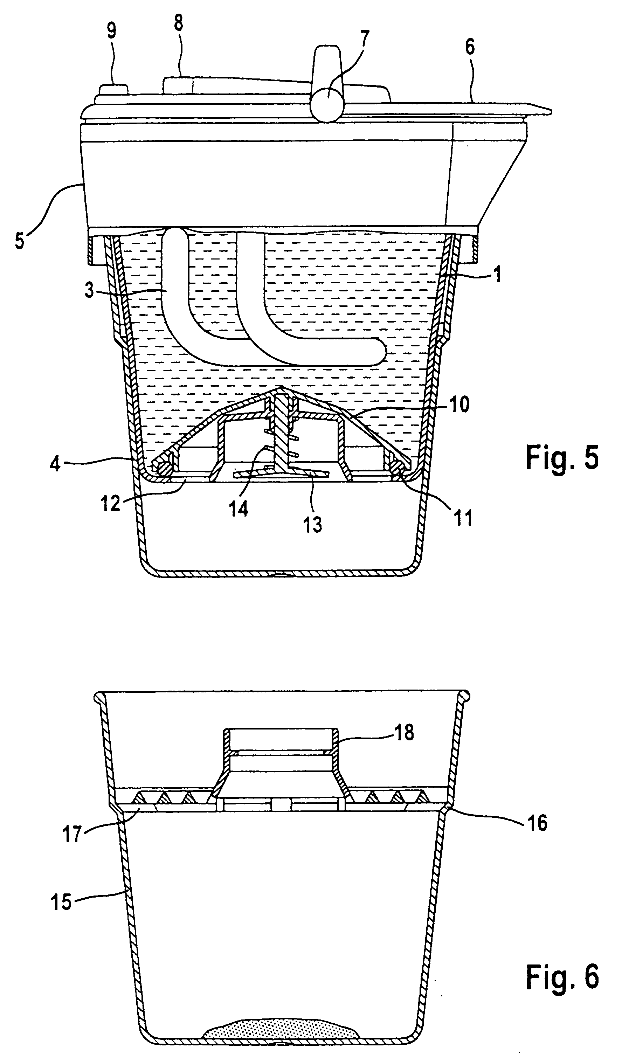

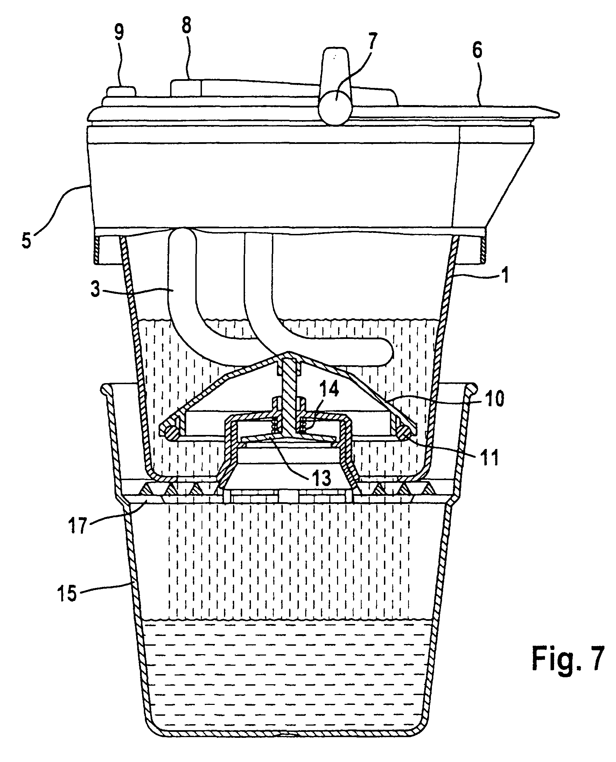

Die Ausführungsformen der Figuren 5 bis 7 entspricht im wesentlichen derjenigen der Figuren 1 bis 4 mit dem Unterschied, daß der mittige Vorsprung 18 des scheibenförmigen Elements 17 größer ist und mit einem größeren Stößel 13 zusammenwirkt. Außerdem ist der Ventilteller 10 im wesentlichen konusförmig ausgebildet und trägt an seinem Rand eine O-Ringdichtung 11.

Die Form der Trinkbecher kann stark variiert werden. Es können wiederverwendbare Trinkbecher oder Einwegtrinkbecher verwendet werden. Entscheidend ist nur, daß ein scheibenförmiges Element 17 mit einem solchen Vorsprung 18 eingesetzt werden kann.

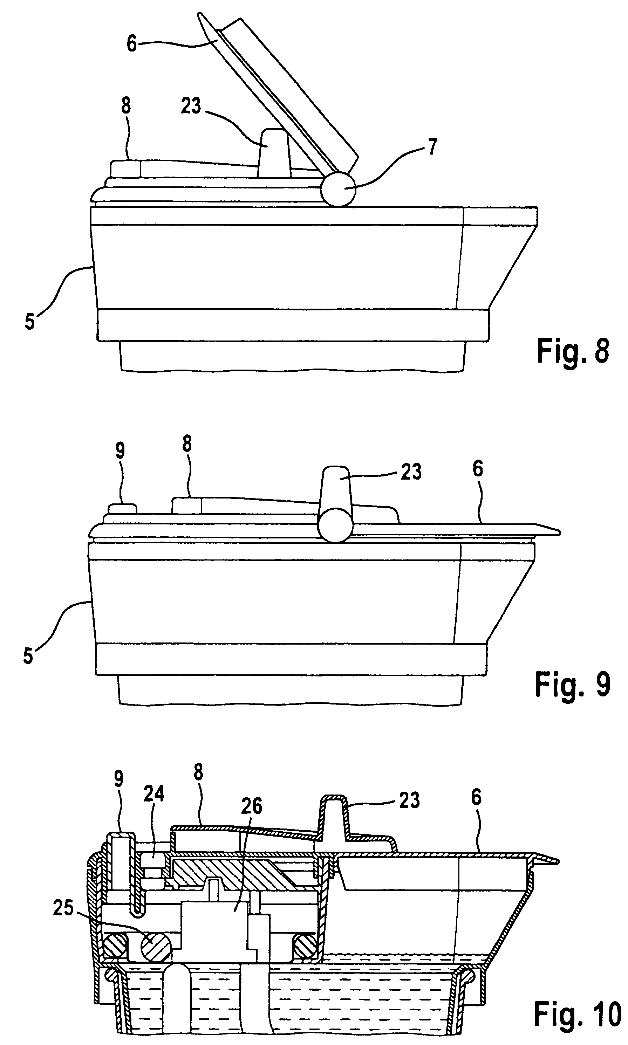

In den Figuren 8 bis 10 ist die obere Abdeckung 5 näher erläutert. Die Abdeckung 5 weist eine Klappe 6 auf, die um ein Gelenk 7 verschwenkt werden kann. In Figur 8 ist die Klappe 6 in der offenen, in Figur 9 in der geschlossenen Stellung gezeigt. Auf dem Deckel 5 befindet sich weiter ein Schieber 8 mit einer Handhabe 23, der in Figur 9 gegenüber der Stellung von Figur 8 nach rechts verschoben ist und so die Klappe 6 verriegelt. Gleichzeitig wird dadurch ein Schalter 9 freigegeben, der bei der Stellung der Figur 8 verdeckt ist. Dadurch wird entweder der Strom automatisch eingestellt oder es wird die Möglichkeit geschaffen, den Schalter 9 zu betätigen, so daß der Strom eingeschaltet werden kann.

Figur 10 zeigt die Stellung der Teile der Figur 9 im Schnitt, wo auch noch eine Leuchtdiode 24 gezeigt ist, mit der der Einschaltzustand der Heizeinrichtung signalisiert werden kann.

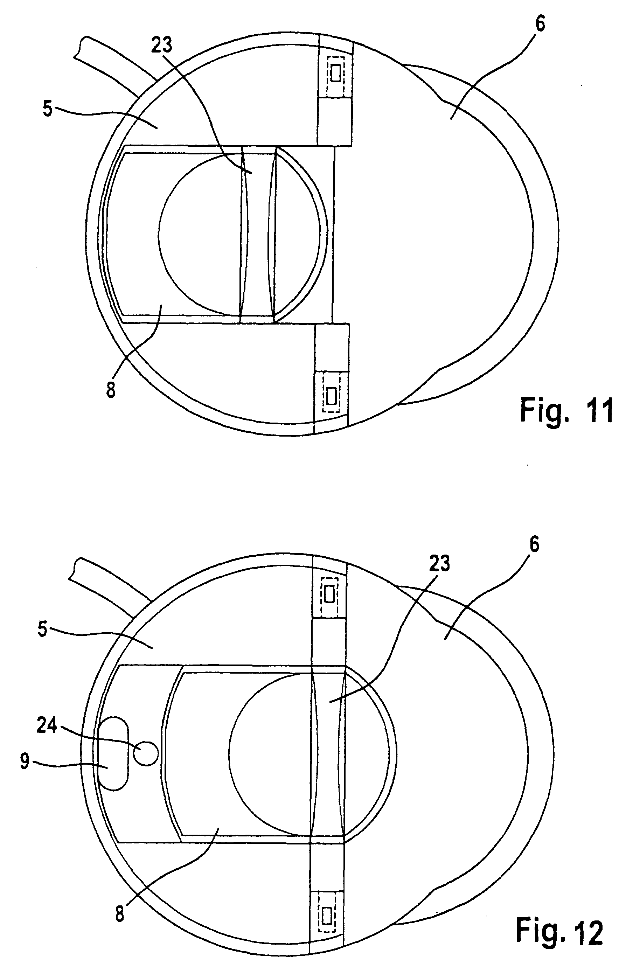

In den Figuren 11 und 12 ist die Abdeckung 5 von oben gezeigt, wobei bei der Darstellung der Figur 11 die Klappe 6 noch geöffnet werden kann, während sie bei der Stellung des Schiebers 8 der Figur 12 verriegelt ist, um ein Überschwappen bzw. Auslaufen zu verhindern. Weitere Sicherungsmaßnahmen sind der in Figur 10 gezeigte Trockenlaufschutz 25 und ein Temperaturschalter 26. Ein weiteres Sicherheitsmerkmal besteht darin, daß, falls die Bedienungsperson den Behälter aus dem Becher heraushebt, bevor das heiße Wasser vollständig in den Becher gelaufen ist, das Ventil 10 sofort schließt, so daß auch insofern Verbrühungsgefahr ausgeschlossen ist.

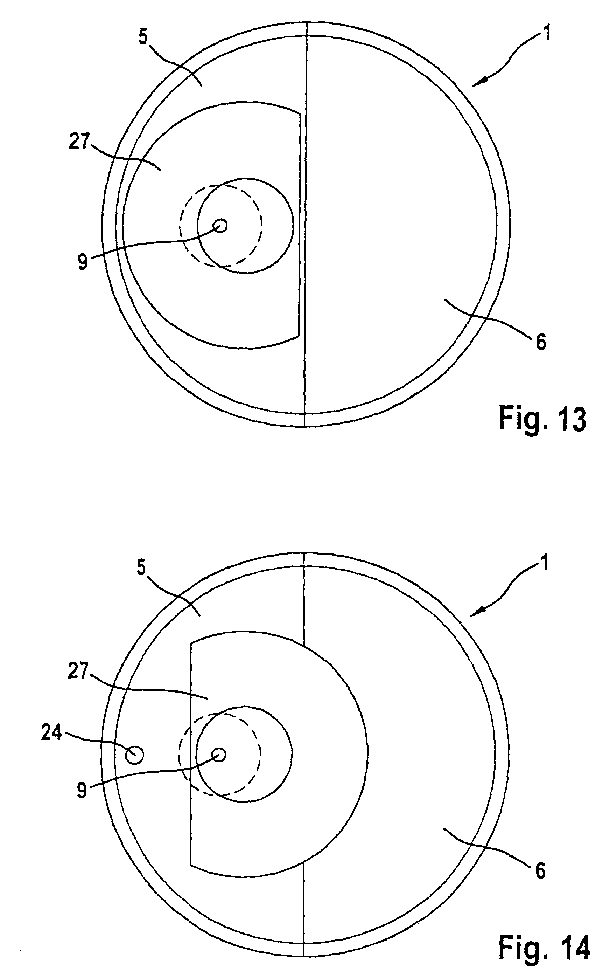

Die in den Figuren 13 und 14 gezeigte Ausführungsform weist zum Verriegeln des Deckels 6 statt einem Schieber 8 eine verschwenkbare Scheibe 27 auf.

## Patentansprüche

1. Vorrichtung zum Zubereiten heißer Getränke, Suppen und ähnlicher Nahrungs-/Genußmittel mit einem Trinkbecher (15) und einem darin einzusetzenden mit einer elektrischen Heizeinrichtung (3) versehenen verschließbaren Behälter (1) für die zu erwärmende Flüssigkeit (2), die nach dem Erwärmen in den Trinkbecher (15) entleert wird, nachdem ein Ventil (10) des Behälters (1) geöffnet worden ist, **dadurch gekennzeichnet, daß** das Ventil (10) zum Zusammenwirken mit einem axial sich erstreckenden mittigen Vorsprung (18) im Trinkbecher (15) zum Öffnen des Ventils (10) beim Einsetzen des Behälters (1) in den Trinkbecher (15) ausgebildet ist, und daß der Vorsprung (18) an einem scheibenförmigen mit Durchbrechungen versehenen Element (17) angeordnet ist, das in den Trinkbecher (15) in einem Abstand vom Boden desselben eingesetzt ist.

2. Vorrichtung nach Anspruch 1, **dadurch gekennzeichnet, daß** das scheibenförmige Element (17) als Überschwappsicherung ausgebildet ist.

3. Vorrichtung nach Anspruch 1 oder 2 **dadurch gekennzeichnet, daß** der Behälter (1) für die zu erwärmende Flüssigkeit mit einem aufklappbaren Deckel (6) versehen ist.

4. Vorrichtung nach Anspruch 3, **dadurch gekennzeichnet, daß** der Deckel (6) mit einer Verriegelung in Form eines Schiebers (8) in der geschlossenen Stellung arretierbar ist.

5. Vorrichtung nach Anspruch 3, **dadurch gekennzeichnet, daß** der Deckel (6) mit einer Verriegelung in Form einer verschwenkbaren Scheibe (27) in der geschlossenen Stellung arretierbar ist.

6. Vorrichtung nach Aspruch 4 oder 5, **dadurch gekennzeichnet, daß** die Verriegelung (8, 27) als Schalter (9) für die Heizeinrichtung (3) ausgebildet ist.

7. Vorrichtung nach Anspruch 4 oder 5, **dadurch gekennzeichnet, daß** die Verriegelung (8, 27) einen Schalter (9) für die Heizeinrichtung (3) betätigt.

8. Vorrichtung nach Anspruch 4 oder 5, **dadurch gekennzeichnet, daß** die Verriegelung (8, 27) bei Arretierung des Deckels (6) einen Schalter (9) für die Heizeinrichtung (3) zugänglich macht.

## Claims

1. Appliance for the preparation of hot drinks, soups and similar nutritional/semi-luxury foods, with a drinking cup (15) and with a closable container (1), to be inserted in the latter and provided with an electrical heating device (3), for the liquid (2) to be heated, which, after heating, is emptied into the drinking cup (15) after a valve (10) of a container (1) has been opened, **characterized in that** the valve (10) is designed to co-operate with an axially extending middle projection (18) in the drinking cup (15) for opening the valve (10) when the container (1) is inserted into the drinking cup (15), and **in that** the projection (18) is arranged on a disc-shaped element (17) which is provided with perforations and which can be inserted into the drinking cup (15) at a distance from the bottom of the latter.

2. Appliance according to Claim 1, **characterized in that** the disc-shaped element (17) is designed as a slosh-over safeguard.

3. Appliance according to Claim 1 or 2, **characterized in that** the container (1) for the liquid to be heated is provided with a swing-open lid (6).

4. Appliance according to Claim 3, **characterized in that** the lid (6) can be locked in the closed position by means of an interlock in the form of a slide (8).

5. Appliance according to Claim 3, **characterized in that** the lid (6) can be locked in the closed position by means of an interlock in the form of a pivotable disc (27).

6. Appliance according to Claim 4 or 5, **characterized in that** the interlock (8, 27) is designed as a switch (9) for the heating device (3).

7. Appliance according to Claim 4 or 5, **characterized in that** the interlock (8, 27) actuates a switch (9) for the heating device (3).

8. Appliance according to Claim 4 or 5, **characterized in that** the interlock (8, 27) makes a switch (9) for the heating device (3) accessible during the locking of the lid (6).

## Revendications

1. Dispositif pour la préparation de boissons chaudes, de soupes et de produits alimentaires/produits stimulants similaires avec un gobelet (15) et un récipient (1) pouvant fermer, pourvu d'un dispositif de chauffage (3) électrique et à insérer à l'intérieur pour le liquide (2) à réchauffer, qui est vidé après le réchauffement dans le gobelet (15) une fois qu'une vanne (10) du récipient (1) a été ouverte, **caractérisé en ce que** la vanne (10) est conçue pour l'action conjuguée avec une partie saillante (18) centrale et s'étendant dans le sens axial dans le gobelet (15) est réalisée pour l'ouverture de la vanne (10) lors de l'insertion du récipient (1) dans le gobelet (15), et **en ce que** la partie saillante (18) est disposée sur un élément (17) en forme de disque et pourvu de percements, qui est inséré dans le gobelet (15) à une distance du fond celui-ci.

2. Dispositif selon la revendication 1, **caractérisé en ce que** l'élément (17) en forme de disque est conçu comme sécurité anti-débordement.

3. Dispositif selon la revendication 1 ou 2, **caractérisé en ce que** le récipient (1) pour le liquide à réchauffer est pourvu d'un couvercle (6) relevable.

4. Dispositif selon la revendication 3, **caractérisé en ce que** le couvercle (6) peut être bloqué dans la position fermée avec un verrouillage sous la forme d'un coulisseau (8).

5. Dispositif selon la revendication 3, **caractérisé en ce que** le couvercle (6) peut être bloqué dans la position fermée avec un verrouillage sous la forme d'un disque (27) basculant.

6. Dispositif selon la revendication 4 ou 5, **caractérisé en ce que** le verrouillage (8, 27) est conçu comme interrupteur (9) pour le dispositif de chauffage (3).

7. Dispositif selon la revendication 4 ou 5, **caractérisé en ce que** le verrouillage (8, 27) actionne un interrupteur (9) pour le dispositif de chauffage (3).

8. Dispositif selon la revendication 4 ou 5, **caractérisé en ce que** le verrouillage (8, 27) rend accessible un interrupteur (9) pour le dispositif de chauffage (3) en cas de blocage du couvercle (6).
